# FASCICULE DE BREVET EUROPEEN

(11) **EP 0 889 406 B1**
(45) Date de publication et mention de la délivrance du brevet: **16.05.2001**
(21) Numéro de dépôt: 98401673.3
(22) Date de dépôt: 03.07.1998
(51) Int. Cl.: G06F 11/00

(54) **Circuit de détection d'anomalie d'accès à la pile dans un microcontrôleur**
Schaltung zur Erkennung falscher Stapelzugriffe in einem Mikrokontroller
Circuit for detection of erroneous stack access in a microcontroller

(30) Priorité: 03.07.1997 FR 9708444
(43) Date de publication de la demande: 07.01.1999
(73) Titulaire: STMicroelectronics SA, 94250 Gentilly Cedex (FR)
(72) Inventeur: Wuidart, Sylvie, 75116 Paris (FR)
(74) Mandataire: Ballot, Paul

(56) Documents cités:
- EP-A- 0 591 753
- EP-A- 0 762 279
- WO-A-96/38789

## Description

L'invention concerne les microcontrôleurs et, plus particulièrement dans de tels microcontrôleurs, un circuit qui permet de détecter les anomalies d'accès à la partie de mémoire, ou "pile", où sont enregistrées des informations en vue de leur sauvegarde pour une utilisation ultérieure.

Un microcontrôleur comprend principalement une unité centrale de traitement qui traite des informations ou données enregistrées dans une ou plusieurs mémoires selon des programmes ou logiciels également enregistrés dans ces mémoires. L'unité centrale de traitement et les mémoires sont connectées entre elles par une pluralité de conducteurs formant un "bus" de communication sur lequel "circulent" les codes des données à traiter, les codes des instructions identifiant les opérations à effectuer sur ces données et les codes d'adressage de la ou des mémoires.

Au cours d'un processus de traitement, il est parfois nécessaire de sauvegarder certains états de l'unité centrale de traitement, par exemple pour exécuter une routine d'interruption, et de les restaurer après l'interruption pour continuer le processus de traitement. Ces états sont enregistrés ou stockés dans une partie d'une mémoire du type à accès aléatoire plus connue sous l'appellation mémoire RAM. Cette partie de mémoire est appelée "pile".

En cas de débordement de la pile ou de mauvaise écriture du logiciel, le programme peut se "perdre" et conduire l'application à des résultats non prédictibles.

Le but de la présente invention est donc de réaliser un circuit et de mettre en oeuvre un procédé pour détecter un accès erroné à la pile et générer une alarme si un tel accès est détecté.

Par ailleurs, il peut se produire, en cas d'erreur d'écriture du logiciel, que des informations soient enregistrées dans la partie de la mémoire réservée à la pile, ce qui conduit à un mauvais fonctionnement.

Un autre but de la présente invention est donc de réaliser un circuit et de mettre en oeuvre un procédé pour détecter un accès à la pile non conforme et générer une alarme si un tel accès est détecté.

Enfin, un autre but de la présente invention est un circuit et un procédé qui interdisent l'usage du microcontrôleur en cas de détection d'une anomalie d'accès à la pile.

L'invention concerne donc un circuit de détection d'anomalie d'accès à la pile dans un microcontrôleur comprenant une unité centrale de traitement, au moins une mémoire à accès aléatoire dont une partie est réservée à la pile, un circuit d'entrées/sorties pour l'entrée et la sortie des informations et un bus de communication entre l'unité centrale de traitement, le circuit d'entrées/sorties et au moins ladite mémoire, caractérisé en ce qu'il comprend :
- des premiers moyens pour détecter tout accès à la pile,
- des seconds moyens pour détecter toute instruction comportant un accès à la pile, et
- des troisièmes moyens pour générer un signal d'alarme lorsqu'un accès à la pile est détecté en dehors d'une instruction comportant un tel accès.

Selon l'invention, le signal d'anomalie ou d'alarme peut être utilisé pour interdire le fonctionnement du microcontrôleur, par exemple en bloquant la sortie des informations dans le circuit d'entrées/sorties.

Selon l'invention, les premiers moyens comprennent un circuit de décodage des codes d'adressage de la mémoire à accès aléatoire qui fournit un premier signal lorsque le code d'adressage correspond à une adresse dans la pile.

Les deuxièmes moyens comprennent un circuit de décodage des codes d'instructions qui fournit un second signal lorsque le code d'instruction correspond à une instruction comportant un accès à la pile,

Les troisièmes moyens comprennent un circuit logique qui combine le premier signal et le second signal pour fournir un signal d'alarme lorsque le premier signal apparaît en l'absence du second signal.

L'invention concerne également un procédé pour détecter une anomalie d'accès à la pile dans un microcontrôleur comprenant une unité centrale de traitement d'informations, au moins une mémoire à accès aléatoire dont une partie est réservée à la pile, un circuit d'entrées/sorties pour l'entrée et la sortie des informations et un bus de communication entre l'unité centrale de traitement, au moins ladite mémoire et le circuit d'entrées/sorties, caractérisé en ce qu'il comprend les étapes suivantes consistant à :
- générer un premier signal dans le cas de l'adressage de la pile,
- générer un second signal dans le cas d'une instruction comportant un accès à la pile, et
- générer un signal d'alarme lorsque le premier signal est présent alors que le second signal est absent.

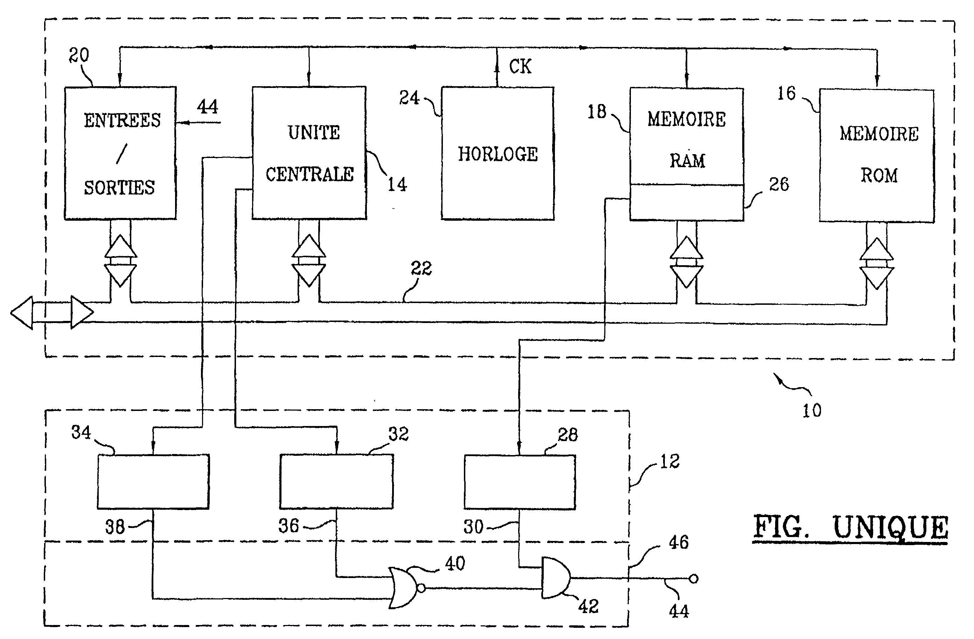

L'invention sera mieux comprise à la lecture de la description suivante d'un exemple particulier de réalisation, ladite description étant faite en relation avec le dessin joint dans lequel :
- la figure unique est un schéma fonctionnel simplifié d'un microcontrôleur comprenant un circuit de détection d'anomalie d'accès à la pile selon l'invention.

Le schéma fonctionnel de la figure unique décrit un microcontrôleur 10 dans lequel est inclus un circuit 12 de détection d'anomalie d'accès à la pile selon l'invention. Le microcontrôleur comprend de manière classique :
- une unité centrale de traitement 14,
- une première mémoire 16 du type à lecture uniquement, plus connue sous l'appellation mémoire ROM, dans laquelle sont enregistrées les instructions des logiciels de traitement,
- une deuxième mémoire 18 du type à accès aléatoire, plus connue sous l'appellation de mémoire RAM, dans laquelle sont enregistrées notamment des données à traiter,
- un circuit entrées/sorties 20 pour l'entrée et la sortie des informations,
- un circuit de transmission 22 ou bus qui connecte entre eux l'unité centrale de traitement 14, les mémoires 16 et 18 et le circuit entrées/sorties 20, et
- un circuit horloge 24 qui fournit les différents signaux CK de commande à l'unité centrale de traitement 14, les mémoires 16 et 18, le circuit entrées/sorties 20 et le bus 22.

Une partie identifiée 26 de la mémoire RAM 18 est réservée à l'enregistrement d'un certain nombre d'informations à certains instants du processus de traitement de données de manière à les sauvegarder pendant un temps plus ou moins long. Il en est ainsi dans le cas d'une routine d'interruption du processus de traitement, routine au début de laquelle les états de l'unité centrale de traitement sont sauvegardés dans la partie 26, ou pile, de la mémoire 18 à des adresses déterminées. Ces états sont ensuite restaurés dans l'unité centrale de traitement 14 à la fin de la routine d'interruption en vue de continuer le traitement interrompu.

Pour détecter une anomalie d'accès à la pile 26 ou mauvais fonctionnement, le circuit 12 a pour but de générer un signal d'alarme lorsqu'un accès à la zone ou pile 26 est détecté en l'absence d'une instruction comportant un tel accès.

A cet effet, le circuit 12 comprend un premier détecteur 28, auquel sont appliqués les codes d'adressage de la mémoire 18, qui fournit un signal sur le conducteur 30 lorsqu'il détecte un code d'adressage correspondant à la pile 26.

Afin de déterminer si ce code d'adressage de la pile 26 correspond à une instruction de l'unité centrale de traitement 14 et non pas à une anomalie d'accès à la pile, le circuit 12 comprend des détecteurs 32 et 34, auxquels sont appliqués les codes d'instructions en provenance de l'unité centrale de traitement 14, qui fournissent respectivement, sur les conducteurs 36 et 38, un signal lorsqu'ils détectent une instruction comportant un accès à la pile 26. Plus précisément, le détecteur 32 est relatif aux instructions contenues dans les logiciels tandis que le détecteur 34 est relatif à la détection de la routine d'interruption qui comporte, par principe, un accès à la pile au début et en fin de routine.

Les conducteurs 36 et 38 sont connectés aux bornes d'entrée d'un circuit logique OU INVERSE 40 dont la borne de sortie est connectée à une des deux bornes d'entrée d'un circuit logique ET 42 dont l'autre borne d'entrée est connectée au conducteur 30 de sortie du détecteur 28. La borne de sortie 44 du circuit ET 42 fournit un signal d'alarme lorsqu'un accès à la pile est détecté en l'absence d'une opération d'accès à la pile commandée par l'unité centrale de traitement, qu'il s'agisse d'une routine d'interruption ou d'une instruction comportant un accès à la pile.

Les circuits 40 et 42 constituent un circuit logique 46 qui combine les signaux présents sur les conducteurs 30, 36 et 38.

Le détecteur 28 est un circuit de décodage des chiffres des codes d'adressage qui caractérisent la zone réservée à la pile.

Le détecteur 32 est un circuit de décodage des chiffres des codes d'instructions qui caractérisent l'accès à la pile, ces codes étant fournis par l'unité centrale de traitement.

Le détecteur 34 est prévu pour reconnaître les signaux PUSH/POP qui indiquent, respectivement pendant une routine d'interruption, l'opération de sauvegarde des états en début de routine et l'opération de restauration des états en fin de routine, opérations qui impliquent des accès en écriture ou en lecture à la pile 26.

L'invention a été décrite dans son application à détecter une anomalie d'accès à la pile mais elle trouve également son application dans la détection d'une erreur de programmation qui consisterait en un adressage de la pile en écriture ou lecture dans le cas d'une instruction qui ne comporterait pas un accès à la pile. Le signal d'alarme avertirait le programmeur de son erreur.

Dans de nombreuses applications, il est nécessaire que le mauvais fonctionnement ne puisse pas avoir de conséquence fâcheuse ; aussi, selon l'invention, il est prévu que le signal d'alarme arrête le fonctionnement du microcontrôleur, par exemple en mettant les bornes de sortie au potentiel de la masse par action sur le circuit entrées/sorties 20.

Le circuit qui vient d'être décrit montre que l'invention consiste également en un procédé dont les étapes consistent à :
- générer un premier signal dans le cas de l'adressage de la pile,
- générer un second signal dans le cas d'une instruction comportant un accès à la pile, et
- générer un signal d'alarme lorsque le premier signal est présent alors que le second signal est absent.

Une étape supplémentaire peut être ajoutée et consiste à bloquer ou arrêter le fonctionnement du microcontrôleur en cas de présence du signal d'alarme.

## Revendications

1. Circuit de détection d'anomalie d'accès à la pile dans un microcontrôleur comprenant une unité centrale de traitement d'informations (14), au moins une mémoire à accès aléatoire (18) dont une partie (26) est réservée à la pile, un circuit d'entrées/sorties (20) et un bus de communication (22) entre l'unité centrale de traitement, le circuit d'entrées/sorties (20) et au moins ladite mémoire, caractérisé en ce qu'il comprend :
- des premiers moyens (28) pour détecter tout accès à la pile (26),
- des seconds moyens (32, 34) pour détecter toute instruction comportant un accès à la pile (26), et
- des troisièmes moyens (46) pour générer un signal d'alarme (44) lorsqu'un accès à la pile (26) est détecté en dehors d'une instruction comportant un tel accès.

2. Circuit de détection selon la revendication 1, caractérisé en ce qu'il comprend, en outre, des quatrièmes moyens (20) pour interdire le fonctionnement du microcontrôleur en présence d'un signal d'alarme (44).

3. Circuit de détection selon les revendications 1 ou 2, caractérisé en ce que :
- les premiers moyens (28) comprennent un circuit de décodage des codes d'adressage de la mémoire à accès aléatoire qui fournit un premier signal (30) lorsque le code d'adressage correspond à une adresse dans la pile,
- les seconds moyens (32, 34) comprennent un circuit de décodage des codes d'instruction qui fournit un second signal (36, 38) lorsque le code d'instruction correspond à une instruction comportant un accès à la pile,
- les troisièmes moyens (46) comprennent un circuit logique (40, 42) qui combine le premier signal (30) et le second signal (36, 38) pour fournir un signal d'alarme lorsque le premier signal apparaît en l'absence du second signal.

4. Procédé pour détecter une anomalie d'accès à la pile (26) dans un microcontrôleur comprenant une unité centrale de traitement des informations (14), au moins une mémoire à accès aléatoire (18) dont une partie est réservée à la pile (26), un circuit d'entrées/sorties (20) et un bus de communication (22) entre l'unité centrale de traitement et au moins ladite mémoire, caractérisé en ce qu'il comprend les étapes suivantes consistant à :
- générer un premier signal (30) dans le cas de l'adressage de la pile (26), et
- générer un second signal (36, 38) dans le cas d'une instruction comportant un accès à la pile (26), et
- générer un signal d'alarme (44) lorsque le premier signal (30) est présent alors que le second signal (36, 38) est absent.

5. Procédé selon la revendication 4, caractérisé en ce qu'il comprend, en outre, l'étape suivante consistant à :
- bloquer le fonctionnement du microcontrôleur en cas de présence du signal d'alarme.

## Patentansprüche

1. Schaltkreis zum Erfassen falscher Stapelzugriffe in einem Mikrokontroller, umfassend eine zentrale Informationsverarbeitungseinheit (14), wenigstens einen Zufallszugriffsspeicher (18), wobei ein Teil (26) des Speichers für den Stapel reserviert ist, eine Eingangs/Ausgangs-Schaltung (20) und ein Übertragungsbus (22) zwischen der zentralen Verarbeitungseinheit, dem Eingangs/Ausgangs-Schaltkreis (20) und dem wenigstens einen Speicher,
**gekennzeichnet durch**
erste Mittel (28) zum Erfassen jedes Zugriffs auf den Stapel (26);
zweite Mittel (32, 34) zum Erfassen jedes Befehls, der einen Zugriff auf den Stapel (26) umfaßt; und
dritte Mittel (46) zum Erzeugen eines Alarmsignals (24), wenn ein Zugriff auf den Stapel (26) außerhalb eines Befehls, der einen solchen Zugriff umfaßt, erfaßt wird.

2. Erfassungsschaltkreis nach Anspruch 1, **dadurch gekennzeichnet**, daß er darüberhinaus vierte Mittel (20) zum Sperren der Funktion des Mikrokontrollers bei Auftreten eines Alarmsignals (44) aufweist.

3. Erfassungsschaltkreis nach Anspruch 1 oder 2, **dadurch gekennzeichnet**, daß
die ersten Mittel (28) einen Schaltkreis zum Decodieren von Adreßcodes des Zufallszugriffsspeichers umfassen, der ein erstes Signal (30) liefert, wenn der Adreßcode einer Adresse in dem Stapel entspricht,
die zweiten Mittel (32, 34) einen Schaltkreis zum Decodieren von Befehlscodes umfassen, der ein zweites Signal (36, 38) liefert, wenn der Befehlscode einem Befehl entspricht, der einen Zugriff auf den Stapel umfaßt,
die dritten Mittel (26) einen Schaltkreis (40, 42) umfassen, der das erste Signal (30) und das zweite Signal (36, 38) kombiniert, um ein Alarmsignal zu liefern, wenn das erste Signal auftritt und das zweite Signal fehlt.

4. Verfahren zum Erfassen eines falschen Stapelzugriffs (26) in einem Mikrokontroller, umfassend eine zentrale Informationsverarbeitungseinheit (14), wenigstens einen Zufallszugriffsspeicher (18), wobei ein Teil des Speichers für den Stapel (26) reserviert ist, ein Eingangs/Ausgangs-Schaltkreis (20) und ein Übertragungsbus (22) zwischen der zentralen Verarbeitungseinheit und dem wenigstens einen Speicher, gekennzeichnet durch die folgenden Verfahrensschritte:
Erzeugen eines ersten Signals (30) in dem Falle der Adressierung des Stapels (26) und
Erzeugen eines zweiten Signals (36, 38) in dem Falle eines Befehls, der einen Zugriff auf den Stapel (26) umfaßt, und
Erzeugen eines Alarmsignals (24), wenn das erste Signal 30 vorliegt, während das zweite Signal (36, 38) fehlt.

5. Verfahren nach Anspruch 4, **dadurch gekennzeichnet,** daß es ferner den folgenden Schritt umfaßt:
Sperren der Funktion des Mikrokontrollers bei Auftreten des Alarmsignals.

## Claims

1. Circuit for detecting errors in access to the stack in a microcontroller comprising a central information processing unit (14), at least one random access memory (18) a portion (26) of which is reserved for the stack, an input/output circuit (20) and a bus (22) for communication between the central processing unit, the input/output circuit (20) and at least said memory, characterised in that it comprises:
- first means (28) for detecting any access to the stack (26) ,
- second means (32, 34) for detecting any instruction including access to the stack (26), and
- third means (46) for generating an alarm signal (44) when access to the stack (26) is detected outside an instruction including such access.

2. Detection circuit according to claim 1, characterised in that it additionally comprises fourth means (20) for preventing the operation of the microcontroller in the presence of an alarm signal (44).

3. Detection circuit according to claims 1 or 2, characterised in that:
- the first means (28) comprise a circuit for decoding the address codes of the random access memory which supplies a first signal (30) when the address code corresponds to an address in the stack,
- the second means (32, 34) comprise a circuit for decoding the instruction codes which supplies a second signal (36, 38) when the instruction code corresponds to an instruction including access to the stack,
- the third means (46) comprise a logic circuit (40, 42) which combines the first signal (30) and the second signal (36, 38) to supply an alarm signal when the first signal appears in the absence of the second signal.

4. Process for detecting an error in access to the stack (26) in a microcontroller comprising a central information processing unit (14), at least one random access memory (18) a portion of which is reserved for the stack (26), an input/output circuit (20) and a bus (22) for communication between the central processing unit and at least said memory, characterised in that it comprises the following steps consisting in:
- generating a first signal (30) in the case of addressing of the stack (26), and
- generating a second signal (36, 38) in the case of an instruction including access to the stack (26), and
- generating an alarm signal (44) when the first signal (30) is present while the second signal (36, 38) is absent.

5. Process according to claim 4, characterised in that it additionally comprises the following step consisting in:
- preventing the operation of the microcontroller in the case of presence of the alarm signal.
